# EUROPÄISCHE PATENTSCHRIFT

(11) **EP 4 341 142 B1**
(45) Veröffentlichungstag und Bekanntmachung des Hinweises auf die Patenterteilung: **19.03.2025**
(21) Anmeldenummer: 22729617.5
(22) Anmeldetag: 18.05.2022
(51) Int. Cl.: B60W 30/16, B60W 30/18

(54) **VERFAHREN UND VORRICHTUNG ZUR ERMITTLUNG EINER BESCHLEUNIGUNGSVORGABE FÜR EIN FAHRZEUG**
METHOD AND DEVICE FOR ASCERTAINING AN ACCELERATION SPECIFICATION FOR A VEHICLE
PROCÉDÉ ET DISPOSITIF DE VÉRIFICATION D'UNE SPÉCIFICATION D'ACCÉLÉRATION POUR UN VÉHICULE

(30) Priorität: 20.05.2021 DE 102021113170
(43) Veröffentlichungstag der Anmeldung: 27.03.2024
(73) Patentinhaber: Bayerische Motoren Werke Aktiengesellschaft, 80809 München (DE)
(72) Erfinder: VELTEN, Thomas, 81371 München (DE); FENDLER, Tamas, 85386 Eching (DE)
(86) Internationale Anmeldenummer: PCT/EP2022/063489
(87) Internationale Veröffentlichungsnummer: WO 2022/243393

(56) Entgegenhaltungen:
- EP-A1- 3 281 830
- DE-A1- 102016 012 466
- US-A1- 2017 217 436
- US-A1- 2019 079 523

## Beschreibung

Die Erfindung betrifft ein Verfahren und eine entsprechende Vorrichtung zur Ermittlung einer Beschleunigungsvorgabe für ein Fahrzeug, insbesondere für eine automatisierte Längs- und/oder Querführung eines Fahrzeugs.

Ein Fahrzeug kann mehrere unterschiedliche Fahrfunktion, insbesondere Fahrerassistenzfunktionen, aufweisen, die den Fahrer des Fahrzeugs bei der Längs- und/oder Querführung des Fahrzeugs unterstützen. Beispielsweise kann durch eine Fahrfunktion bei einer Folgefahrt automatisch der Abstand des Fahrzeugs zu einem vor dem Fahrzeug fahrenden Vorder-Fahrzeug eingestellt werden. In einer weiteren Fahrfunktion kann automatisch die Fahrgeschwindigkeit des Fahrzeugs bei einer Freifahrt eingestellt werden. Ferner kann in einer weiteren Fahrfunktion automatisch die Fahrgeschwindigkeit des Fahrzeugs bei einem Spurwechsel eingestellt werden.

Es kann dem Fahrer eines Fahrzeugs ermöglicht werden, mehrere Fahrfunktionen gleichzeitig zu betreiben. Beispielsweise können gleichzeitig der Abstands- und Geschwindigkeitsregler des Fahrzeugs betrieben und ausgehend davon der Spurwechselassistent aktiviert werden.

Eine in der US 2017/217436 A1 beschriebene Fahrunterstützungsvorrichtung ist ausgestattet mit: einem ersten Regler, der konfiguriert ist, um eine erste Beschleunigungsanforderung zum Beschleunigen eines Fahrzeugs oder eine erste Verzögerungsanforderung zum Abbremsen des Fahrzeugs auf der Grundlage einer vorbestimmten Referenzgeschwindigkeit oder eines Zwischenfahrzeug-Abstands zu einem vorausfahrenden Fahrzeug zu erzeugen; einem zweiten Regler, der konfiguriert ist, um eine zweite Verzögerungsanforderung zum Abbremsen des Fahrzeugs auf der Grundlage einer Überlappungsrate zwischen dem Fahrzeug und einem Hindernis, das vor dem Fahrzeug liegt, zu erzeugen; und einem Regulator, der konfiguriert ist, um die erforderliche Verzögerung der ersten Verzögerungsanforderung und die erforderliche Verzögerung der zweiten Verzögerungsanforderung nach ihrer Größe zu vergleichen und die Verzögerungsanforderung mit der höheren erforderlichen Verzögerung auszugeben.

Das vorliegende Dokument befasst sich mit der technischen Aufgabe, den Komfort der automatisierten Längs- und/oder Querführung eines Fahrzeugs bei dem parallelen Betrieb von mehreren automatisierten Fahrfunktionen zu erhöhen.

Die Aufgabe wird durch jeden der unabhängigen Ansprüche gelöst. Vorteilhafte Ausführungsformen werden u.a. in den abhängigen Ansprüchen beschrieben.

Gemäß einem Aspekt wird eine Vorrichtung zur Ermittlung einer Fahrzeug-Beschleunigungsvorgabe für ein Fahrzeug bei Betrieb einer Mehrzahl von unterschiedlichen automatisierten Fahrfunktionen in einem Fahrzeug beschrieben. Die einzelnen automatisierten Fahrfunktionen können ausgebildet sein, eine automatisierte Längs- und/oder Querführung des Fahrzeugs zu bewirken. Die Mehrzahl von automatisierten Fahrfunktionen kann insbesondere umfassen: einen Abstandsregler für eine Folgefahrt des Fahrzeugs (der ausgebildet ist, den (Längs-) Abstand des Fahrzeugs zu einem Vorder-Fahrzeug auf einen eingestellten Setz-Abstand einzustellen); einen Geschwindigkeitsregler für eine Freifahrt des Fahrzeugs (der ausgebildet ist, die (Längs-) Fahrgeschwindigkeit des Fahrzeugs auf eine eingestellte Setz-Fahrgeschwindigkeit einzustellen); und/oder einen Spurwechselassistenten für einen Spurwechsel des Fahrzeugs (der ausgebildet ist, das Fahrzeug automatisiert ausgehend von einer aktuell befahrenen Fahrspur auf eine benachbarte Fahrspur zu führen).

Die einzelnen Fahrfunktionen können jeweils einen Regler aufweisen, mit dem ein oder mehrere Zustandsgrößen des Fahrzeugs jeweils auf einen Sollwert eingestellt werden können. Eine Zustandsgröße kann dabei die (Längs- und/oder Quer-) Beschleunigung des Fahrzeugs sein. In dem Fahrzeug kann somit im Rahmen des Betriebs der Mehrzahl von automatisierten Fahrfunktionen eine entsprechende Mehrzahl von Reglern betrieben werden. Die unterschiedlichen Regler können dabei unterschiedliche Regelungsalgorithmen verwenden.

Die Mehrzahl von Reglern kann umfassen: einen Bahnführungsregler (z.B. für den Geschwindigkeitsregler); einen P-Regler (z.B. für den Abstandsregler); und/oder einen planenden Regler, der ausgebildet ist, eine vorausliegende Trajektorie des Fahrzeugs zu planen, um eine Beschleunigungsvorgabe (d.h. eine Soll-Beschleunigung) für das Fahrzeug zu ermitteln (z.B. für den Geschwindigkeitsregler und/oder für den Spurwechselassistenten).

Die Vorrichtung ist eingerichtet, für einen bestimmten Zeitpunkt (aus einer Sequenz von aufeinanderfolgenden Zeitpunkten), anhand der Mehrzahl von Reglern für die Mehrzahl von Fahrfunktionen eine entsprechende Mehrzahl von Funktions-spezifischen Beschleunigungsvorgaben zu ermitteln. Die einzelnen Regler der parallel betriebenen Fahrfunktionen können somit (jeweils unabhängig voneinander) betrieben werden, um jeweils eine Funktions-spezifische Beschleunigungsvorgabe (d.h. eine Soll-Beschleunigung) für das Fahrzeug zu ermitteln.

Die Vorrichtung kann ferner eingerichtet sein, die Fahrzeug-Beschleunigungsvorgabe für das automatisierte (Längs- und/oder Quer-) Führen des Fahrzeugs an dem bestimmten Zeitpunkt auf Basis der Mehrzahl von Funktions-spezifischen Beschleunigungsvorgaben zu ermitteln. Die Vorrichtung kann insbesondere eingerichtet sein, eine, insbesondere die relativ kleinste Funktions-spezifische Beschleunigungsvorgabe, der Mehrzahl von Funktions-spezifischen Beschleunigungsvorgaben als die Fahrzeug-Beschleunigungsvorgabe auszuwählen. Die Vorrichtung kann z.B. eingerichtet sein, die Funktions-spezifische Beschleunigungsvorgabe aus der Mehrzahl von Funktions-spezifischen Beschleunigungsvorgaben als Fahrzeug-Beschleunigungsvorgabe auszuwählen, die den relativ kleinsten Wert aufweist (unter Berücksichtigung des Vorzeichens), und/oder die auf eine möglichst geringe Beschleunigung oder auf eine möglichst hohe Verzögerung des Fahrzeugs abzielt.

Es kann somit für den bestimmten Zeitpunkt ein Regler aus der Mehrzahl von Reglern ausgewählt werden, dessen Funktions-spezifische Beschleunigungsvorgabe für die automatisierte (Längs- und/oder Quer-) Führung des Fahrzeugs verwendet wird. Dabei kann der Regler mit der kleinsten Beschleunigungsvorgabe oder der höchsten Verzögerungsvorgabe ausgewählt werden. So kann auch bei Betrieb von mehreren automatisierten Fahrfunktionen eine robuste (Längs- und/oder Quer-) Führung des Fahrzeugs bewirkt werden.

Die Vorrichtung kann eingerichtet ist, zumindest einen Längs- und/oder Querführungsaktor (z.B. einen Antriebsmotor, eine Bremsvorrichtung und/oder eine Lenkvorrichtung) des Fahrzeugs in Abhängigkeit von der ermittelten Fahrzeug-Beschleunigungsvorgabe zu betreiben, um die automatisierte (Längs-und/oder Quer-) Führung des Fahrzeugs zu bewirken.

Des Weiteren ist die Vorrichtung eingerichtet, zumindest einem Teil der Mehrzahl von Reglern (insbesondere den ein oder mehreren planenden Reglern) eine Rückmeldung in Bezug auf die ermittelte Fahrzeug-Beschleunigungsvorgabe bereitzustellen. Die Rückmeldung für einen Regler kann dabei anzeigen, ob der Regler an dem bestimmten Zeitpunkt aktiv an der Ermittlung der Fahrzeug-Beschleunigungsvorgabe mitgewirkt hat, oder nur passiv einen Funktions-spezifischen Beschleunigungsvorgabe bereitgestellt hat. Insbesondere kann die Rückmeldung für den Regler anzeigen, ob an dem bestimmten Zeitpunkt die Funktions-spezifische Beschleunigungsvorgabe des Reglers als Fahrzeug-Beschleunigungsvorgabe verwendet wurde oder nicht.

Die Rückmeldung kann dann von dem Teil der Mehrzahl von Reglern bei der Ermittlung der jeweiligen Funktions-spezifischen Beschleunigungsvorgabe für einen nachfolgenden Zeitpunkt (insbesondere für den direkt auf den bestimmten Zeitpunkt nachfolgenden Zeitpunkt aus der Sequenz von Zeitpunkten) berücksichtigt werden. Insbesondere kann die Funktionsweise eines Reglers zur Ermittlung der Funktions-spezifischen Beschleunigungsvorgabe für den nachfolgenden Zeitpunkt von der Rückmeldung in Bezug auf die Fahrzeug-Beschleunigungsvorgabe für den bestimmten Zeitpunkt abhängen.

Durch die Rückkopplung von Information in Bezug auf die ermittelte Fahrzeug-Beschleunigungsvorgabe auf die einzelnen Regler kann ein besonders robuster und komfortabler Betrieb von mehreren automatisierten Fahrfunktionen ermöglicht werden. Insbesondere können so komfortable Übergänge zwischen den jeweils dominant auf die automatisierte Längs- und/oder Querführung des Fahrzeugs wirkenden Fahrfunktionen bewirkt werden.

Wie bereits oben dargelegt, kann die Mehrzahl von Reglern zumindest einen planenden Regler umfassen, der eingerichtet ist, zur Ermittlung der Funktions-spezifischen Beschleunigungsvorgabe eine Beschleunigung des Fahrzeugs an einem vorausliegenden Zeitpunkt, insbesondere einen Verlauf der Beschleunigung des Fahrzeugs an einer Sequenz von vorausliegenden Zeitpunkten, zu planen. Insbesondere kann der planende Regler ausgebildet sein, ein oder mehrere Zustandsgrößen des Fahrzeugs (wie z.B. die Beschleunigung) für eine Sequenz von vorausliegenden Zeitpunkten zu planen. So kann eine besonders komfortable Längs- und/oder Querführung des Fahrzeugs bewirkt werden. Die Planung des Beschleunigungsverlaufs kann z.B. durch einen polynomialen Ansatz oder durch quadratische Optimierung erfolgen.

Die Vorrichtung kann eingerichtet sein, die Funktions-spezifische Beschleunigungsvorgabe des planenden Reglers auf Basis der geplanten Beschleunigung des Fahrzeugs an dem vorausliegenden Zeitpunkt, insbesondere als die geplante Beschleunigung des Fahrzeugs an dem vorausliegenden Zeitpunkt, zu ermitteln.

Beispielsweise kann für einen nicht-planenden Regler (wie z.B. einen P-Regler) der Sollwert der Beschleunigung für den bestimmten Zeitpunkt als Funktions-spezifische Beschleunigungsvorgabe ermittelt werden. Andererseits kann für einen planenden Regler die geplante Beschleunigung des Fahrzeugs an einem vorausliegenden Zeitpunkt (der dem bestimmten Zeitpunkt nachfolgt, etwa um 0,5 Sekunden oder mehr) als Funktions-spezifische Beschleunigungsvorgabe verwendet werden. So kann der Komfort bei dem Übergang zwischen verschiedenen Reglern für unterschiedliche Fahrfunktionen weiter erhöht werden.

Wie bereits oben dargelegt, kann die Rückmeldung für einen planenden Regler anzeigen, ob der planende Regler an dem bestimmten Zeitpunkt aktiv an der Ermittlung der Fahrzeug-Beschleunigungsvorgabe mitgewirkt hat, oder nur passiv eine Funktions-spezifische Beschleunigungsvorgabe bereitgestellt hat. Insbesondere kann die Rückmeldung anzeigen, ob die Funktions-spezifische Beschleunigungsvorgabe des planenden Reglers als Fahrzeug-Beschleunigungsvorgabe verwendet wurde oder nicht.

Die Planung des planenden Reglers für den nachfolgenden Zeitpunkt, insbesondere der von dem planenden Regler prädizierte bzw. geplante Verlauf der Beschleunigung des Fahrzeugs, kann dann davon abhängen, ob der planende Regler an dem bestimmten Zeitpunkt aktiv an der Ermittlung der Fahrzeug-Beschleunigungsvorgabe mitgewirkt hat (insbesondere ob die Funktions-spezifische Beschleunigungsvorgabe des planenden Reglers als Fahrzeug-Beschleunigungsvorgabe verwendet wurde), oder nur passiv einen Funktions-spezifischen Beschleunigungsvorgabe bereitgestellt hat (insbesondere die Funktions-spezifische Beschleunigungsvorgabe des planenden Reglers nicht als Fahrzeug-Beschleunigungsvorgabe verwendet wurde).

Der planende Regler kann insbesondere ausgebildet sein, den prädizierten und/oder geplanten Verlauf der Beschleunigung des Fahrzeugs für den nachfolgenden Zeitpunkt auf Basis des prädizierten und/oder geplanten Verlaufs der Beschleunigung des Fahrzeugs für den bestimmten Zeitpunkt zu ermitteln, wenn der planende Regler an dem bestimmten Zeitpunkt aktiv an der Ermittlung der Fahrzeug-Beschleunigungsvorgabe mitgewirkt hat (insbesondere wenn die Funktions-spezifische Beschleunigungsvorgabe des planenden Reglers als Fahrzeug-Beschleunigungsvorgabe verwendet wurde).

Alternativ oder ergänzend kann der planende Regler ausgebildet sein, den prädizierten und/oder geplanten Verlauf der Beschleunigung des Fahrzeugs für den nachfolgenden Zeitpunkt neu zu ermitteln, ohne den prädizierten und/oder geplanten Verlauf der Beschleunigung des Fahrzeugs für den bestimmten Zeitpunkt zu berücksichtigen, wenn der planende Regler an dem bestimmten Zeitpunkt nur passiv eine Funktions-spezifische Beschleunigungsvorgabe bereitgestellt hat (insbesondere wenn die Funktions-spezifische Beschleunigungsvorgabe des planenden Reglers nicht als Fahrzeug-Beschleunigungsvorgabe verwendet wurde).

Durch die Anpassung des Betriebs eines planenden Reglers in Abhängigkeit von der Rückmeldung kann der Komfort bei dem Übergang zwischen verschiedenen Reglern für unterschiedliche Fahrfunktionen weiter erhöht werden.

Wie bereits oben dargelegt, kann die Vorrichtung eingerichtet sein, die in diesem Dokument beschriebenen Schritte an einer Sequenz von aufeinanderfolgenden Zeitpunkten (insbesondere periodisch) zu wiederholen, um einen dauerhaft komfortablen, parallelen Betrieb von mehreren Fahrfunktionen zu ermöglichen. Dabei kann an dem jeweiligen Zeitpunkt eine Mehrzahl von Funktions-spezifischen Beschleunigungsvorgaben ermittelt werden; es kann eine Fahrzeug-Beschleunigungsvorgabe auf Basis der Mehrzahl von Funktions-spezifischen Beschleunigungsvorgaben ermittelt werden, und es kann zumindest einem Teil der Mehrzahl von Reglern eine Rückmeldung in Bezug auf die ermittelte Fahrzeug-Beschleunigungsvorgabe bereitgestellt werden.

Gemäß einem weiteren Aspekt wird ein (Straßen-) Kraftfahrzeug (insbesondere ein Personenkraftwagen oder ein Lastkraftwagen oder ein Bus oder ein Motorrad) beschrieben, das die in diesem Dokument beschriebene Vorrichtung umfasst.

Gemäß einem weiteren Aspekt wird ein Verfahren zur Ermittlung einer Fahrzeug-Beschleunigungsvorgabe für ein Fahrzeug bei Betrieb einer Mehrzahl von unterschiedlichen automatisierten Fahrfunktionen in einem Fahrzeug beschrieben. Das Verfahren umfasst für einen bestimmten Zeitpunkt das Ermitteln, anhand einer Mehrzahl von Reglern für die entsprechende Mehrzahl von Fahrfunktionen, einer entsprechenden Mehrzahl von Funktions-spezifischen Beschleunigungsvorgaben. Des Weiteren umfasst das Verfahren das Ermitteln der Fahrzeug-Beschleunigungsvorgabe für das automatisierte Führen des Fahrzeugs an dem bestimmten Zeitpunkt auf Basis der Mehrzahl von Funktions-spezifischen Beschleunigungsvorgaben. Außerdem umfasst das Verfahren das Bereitstellen einer Rückmeldung in Bezug auf die ermittelte Fahrzeug-Beschleunigungsvorgabe für zumindest einen Teil der Mehrzahl von Reglern. Die Rückmeldung kann dann von dem Teil der Mehrzahl von Reglern bei der Ermittlung der jeweiligen Funktions-spezifischen Beschleunigungsvorgabe für einen nachfolgenden Zeitpunkt berücksichtigt werden.

Gemäß einem weiteren Aspekt wird ein Software (SW) Programm beschrieben. Das SW Programm kann eingerichtet werden, um auf einem Prozessor (z.B. auf einem Steuergerät eines Fahrzeugs) ausgeführt zu werden, und um dadurch das in diesem Dokument beschriebene Verfahren auszuführen.

Gemäß einem weiteren Aspekt wird ein Speichermedium beschrieben. Das Speichermedium kann ein SW Programm umfassen, welches eingerichtet ist, um auf einem Prozessor ausgeführt zu werden, und um dadurch das in diesem Dokument beschriebene Verfahren auszuführen.

Unter dem Begriff "automatisiertes Fahren" kann im Rahmen des Dokuments ein Fahren mit automatisierter Längs- oder Querführung oder ein autonomes Fahren mit automatisierter Längs- und Querführung verstanden werden. Bei dem automatisierten Fahren kann es sich beispielsweise um ein zeitlich längeres Fahren auf der Autobahn oder um ein zeitlich begrenztes Fahren im Rahmen des Einparkens oder Rangierens handeln. Der Begriff "automatisiertes Fahren" umfasst ein automatisiertes Fahren mit einem beliebigen Automatisierungsgrad. Beispielhafte Automatisierungsgrade sind ein assistiertes, teilautomatisiertes, hochautomatisiertes oder vollautomatisiertes Fahren. Diese Automatisierungsgrade wurden von der Bundesanstalt für Straßenwesen (BASt) definiert (siehe BASt-Publikation "Forschung kompakt", Ausgabe 11/2012). Beim assistierten Fahren führt der Fahrer dauerhaft die Längs- oder Querführung aus, während das System die jeweils andere Funktion in gewissen Grenzen übernimmt. Beim teilautomatisierten Fahren (TAF) übernimmt das System die Längs- und Querführung für einen gewissen Zeitraum und/oder in spezifischen Situationen, wobei der Fahrer das System wie beim assistierten Fahren dauerhaft überwachen muss. Beim hochautomatisierten Fahren (HAF) übernimmt das System die Längs- und Querführung für einen gewissen Zeitraum, ohne dass der Fahrer das System dauerhaft überwachen muss; der Fahrer muss aber in einer gewissen Zeit in der Lage sein, die Fahrzeugführung zu übernehmen. Beim vollautomatisierten Fahren (VAF) kann das System für einen spezifischen Anwendungsfall das Fahren in allen Situationen automatisch bewältigen; für diesen Anwendungsfall ist kein Fahrer mehr erforderlich. Die vorstehend genannten vier Automatisierungsgrade entsprechen den SAE-Level 1 bis 4 der Norm SAE J3016 (SAE - Society of Automotive Engineering). Beispielsweise entspricht das hochautomatisierte Fahren (HAF) Level 3 der Norm SAE J3016. Ferner ist in der SAE J3016 noch der SAE-Level 5 als höchster Automatisierungsgrad vorgesehen, der in der Definition der BASt nicht enthalten ist. Der SAE-Level 5 entspricht einem fahrerlosen Fahren, bei dem das System während der ganzen Fahrt alle Situationen wie ein menschlicher Fahrer automatisch bewältigen kann; ein Fahrer ist generell nicht mehr erforderlich.

Es ist zu beachten, dass die in diesem Dokument beschriebenen Verfahren, Vorrichtungen und Systeme sowohl alleine, als auch in Kombination mit anderen in diesem Dokument beschriebenen Verfahren, Vorrichtungen und Systemen verwendet werden können. Des Weiteren können jegliche Aspekte der in diesem Dokument beschriebenen Verfahren, Vorrichtungen und Systemen in vielfältiger Weise miteinander kombiniert werden. Insbesondere können die Merkmale der Ansprüche in vielfältiger Weise miteinander kombiniert werden.

Im Weiteren wird die Erfindung anhand von Ausführungsbeispielen näher beschrieben. Dabei zeigen
Figur 1 beispielhafte Komponenten eines Fahrzeugs;
Figuren 2a bis 2c beispielhafte Fahrfunktionen zur automatisierten Längsführung eines Fahrzeugs;
Figur 3 beispielhafte Beschleunigungsvorgaben von unterschiedlichen Fahrfunktionen eines Fahrzeugs;
Figur 4 eine beispielhafte Vorrichtung zur Ermittlung einer Beschleunigungsvorgabe für ein Fahrzeug; und
Figur 5 ein Ablaufdiagramm eines beispielhaften Verfahrens zur Ermittlung einer Beschleunigungsvorgabe für ein Fahrzeug.

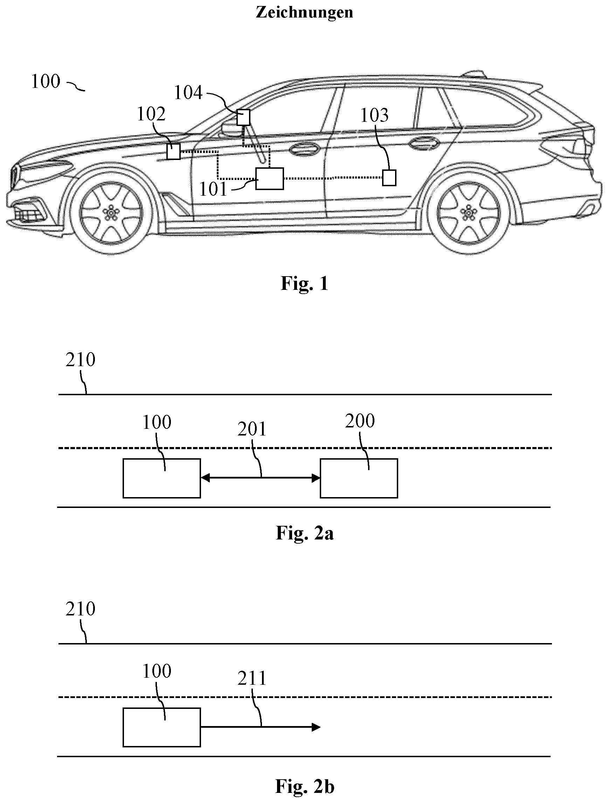

Wie eingangs dargelegt, befasst sich das vorliegende Dokument mit der Erhöhung des Komforts eines Fahrzeugs bei Betrieb von mehreren automatisierten Fahrfunktionen. In diesem Zusammenhang zeigt Fig. 1 beispielhafte Komponenten eines Fahrzeugs 100. Das Fahrzeug 100 umfasst ein oder mehrere Umfeldsensoren 102, die eingerichtet sind, Umfelddaten (d.h. Sensordaten) in Bezug auf das Umfeld des Fahrzeugs 100 zu erfassen. Beispielhafte Umfeldsensoren 102 sind eine Kamera, ein Radarsensor, ein Lidarsensor, ein Ultraschallsensor, etc.

Eine (Steuer-) Vorrichtung 101 des Fahrzeugs 100 kann eingerichtet sein, auf Basis der Umfelddaten Information in Bezug auf das Umfeld des Fahrzeugs 100 zu ermitteln, wie z.B. den Abstand zu einem vor dem Fahrzeug 100 fahrenden Vorder-Fahrzeug, den Verlauf einer von dem Fahrzeug 100 befahrenen Fahrspur, etc. Die Vorrichtung 101 kann ferner eingerichtet sein, ein oder mehrere Längs- und/oder Querführungsaktoren 103 des Fahrzeugs 100 (z.B. einen Antriebsmotor, einer Bremsvorrichtung und/oder eine Lenkvorrichtung) auf Basis der Umfelddaten und/oder auf Basis der ermittelten Umfeldinformation zu betreiben, insbesondere um eine automatisierte Längs- und/oder Querführung des Fahrzeugs 100 zu bewirken.

Das Fahrzeug 100 kann ferner eine Benutzerschnittstelle 104 für einen Fahrer des Fahrzeugs 100 umfassen. Es kann dem Fahrer des Fahrzeugs 100 ermöglicht werden, eine automatisierte Fahrfunktion über die Benutzerschnittstelle 104 zu aktivieren oder zu deaktivieren. Ferner kann es dem Fahrer des Fahrzeugs 100 ermöglicht werden, einen Betriebsparameter einer Fahrfunktion festzulegen, wie z.B. einen von dem Fahrer gewünschten Setz-Abstand des Fahrzeugs 100 zu einem Vorder-Fahrzeug und/oder eine von dem Fahrer gewünschte Setz-Geschwindigkeit des Fahrzeugs 100.

Wie eingangs dargelegt, können mehrere Fahrfunktionen des Fahrzeugs 100 gleichzeitig betrieben werden, insbesondere Fahrfunktionen, die gleichzeitig auf die Längs- bzw. die Querführung des Fahrzeugs 100 einwirken. Fig. 2a zeigt z.B. einen automatischen Abstandsregler, mit dem der Abstand 201 des Fahrzeugs 100 zu einem Vorder-Fahrzeug 100 automatisch auf den hinterlegten Setz-Abstand eingestellt werden kann. Zu diesem Zweck kann ein Regler, z.B. ein P-Regler, verwendet werden, der darauf ausgelegt ist, den Ist-Abstand 201 auf den hinterlegten Setz-Abstand zu regeln.

Fig. 2b zeigt als weitere automatisierte Fahrfunktion einen Geschwindigkeitsregler, bei dem die Fahrgeschwindigkeit 211 des Fahrzeugs 100 bei einer Freifahrt auf einer Fahrbahn 210 auf eine hinterlegte Setz-Geschwindigkeit eingestellt wird. Dabei kann im Rahmen des bei der Fahrfunktion verwendeten Reglers eine Trajektorienplanung erfolgen, bei der der Zustand des Fahrzeugs 100, insbesondere der Zustand in Bezug auf die Position des Fahrzeugs 100, in Bezug auf die Fahrgeschwindigkeit 211 des Fahrzeugs 100 und/oder in Bezug auf die Beschleunigung des Fahrzeugs 100, für einen bestimmten vorausliegenden Planungshorizont geplant wird. Die Ist-Fahrgeschwindigkeit 211 des Fahrzeugs 100 kann dann in Abhängigkeit von der Trajektorienplanung eingestellt werden. Die Durchführung einer Trajektorienplanung ermöglicht eine Freifahrt mit einem besonders hohen Fahrkomfort. Die Trajektorienplanung kann dabei mit einem bestimmten Planungsansatz, z.B. mit einem polynomialen Ansatz, durchgeführt werden.

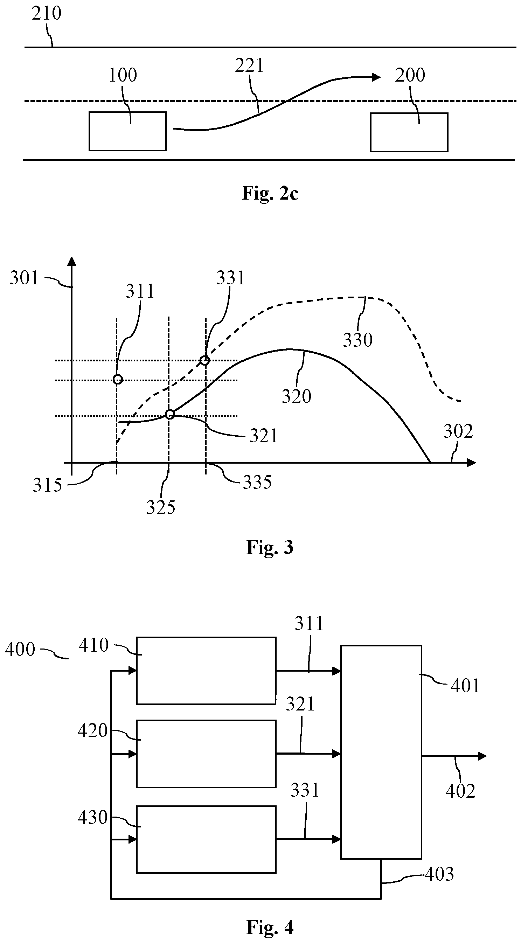

Fig. 2c zeigt als weitere automatisierte Fahrfunktion einen Spurwechselassistenten, bei dem die Fahrgeschwindigkeit 211 des Fahrzeugs 100 auf Basis einer geplanten Fahrtrajektorie 221 für einen Spurwechsel eingestellt werden kann. Im Rahmen des bei dieser Fahrfunktion verwendeten Reglers kann wiederum eine Trajektorienplanung für einen bestimmten Planungshorizont erfolgen, wobei sich der Planungsansatz von dem Planungsansatz für eine Freifahrt unterscheiden kann. Beispielsweise kann eine quadratische Optimierung durchgeführt werden, um eine Trajektorie für einen Spurwechsel zu planen.

In einem Fahrzeug 100 können somit gleichzeitig mehrere Regler betrieben werden, die jeweils einen Einfluss auf die automatisierte Führung, insbesondere auf die automatisierte Längsführung, des Fahrzeugs 100 haben. Der parallele Betrieb von unterschiedlichen Reglern kann, insbesondere bei einem Übergang zwischen unterschiedlichen Reglern, ggf. zu automatisierten Eingriffen führen, die von einem Insassen des Fahrzeugs 100 als unkomfortabel empfunden werden, wie z.B. ein Ruck des Fahrzeugs 100. Dies kann insbesondere dadurch bewirkt werden, dass von den unterschiedlichen Reglern unterschiedliche Vorgaben in Bezug auf die Beschleunigung des Fahrzeugs 100 gemacht werden, wie beispielhaft in Fig. 3 dargestellt.

Fig. 3 zeigt beispielhafte Beschleunigungsvorgaben in Bezug auf die Beschleunigung 301 des Fahrzeugs 100, die durch unterschiedliche Regler des Fahrzeugs 100 ermittelt werden können. Beispielsweise kann von einem ersten Regler (z.B. dem in Zusammenhang mit Fig. 2a beschriebenen Abstandsregler) eine erste Beschleunigungsvorgabe 311 für einen ersten Zeitpunkt 315 gemacht werden. Durch einen zweiten Regler (z.B. dem in Zusammenhang mit Fig. 2b beschriebenen Geschwindigkeitsregler) kann z.B. ein Verlauf 320 in Bezug auf die Beschleunigung 301 als Funktion der Zeit 302 geplant werden (im Rahmen der Trajektorienplanung. Die in diesem Dokument beschriebene Vorrichtung kann ausgebildet sein, auf Basis des Verlaufs 320 eine zweite Beschleunigungsvorgabe 321 des zweiten Reglers zu ermitteln (z.B. als Beschleunigung 301 des Verlaufs 320 für einen zweiten Zeitpunkt 325).

In entsprechender Weise kann ggf. eine dritte Beschleunigungsvorgabe 331 eines dritten Reglers ermittelt werden (z.B. des in Zusammenhang mit Fig. 2c beschriebenen Reglers für einen Spurwechsel). Die dritte Beschleunigungsvorgabe 331 kann z.B. als Beschleunigung 301 eines von dem dritten Regler geplanten Beschleunigungsverlaufs 330 an einem dritten Zeitpunkt 335 ermittelt werden.

Es können somit an einem bestimmten Zeitpunkt während des Betriebs des Fahrzeugs 100 unterschiedliche Beschleunigungsvorgaben 311, 321, 331 vorliegen, die an diesem bestimmten Zeitpunkt durch die ein oder mehreren Aktoren 103 des Fahrzeugs 100 umzusetzen sind. Fig. 4 zeigt eine beispielhafte Vorrichtung 400 zur Ermittlung der Fahrzeug-Beschleunigungsvorgabe 402 zum Betrieb eines Fahrzeugs 100 auf Basis einer Mehrzahl von Funktions-spezifischen Beschleunigungsvorgaben 311, 321, 331, die von einer entsprechenden Mehrzahl von Reglern 410, 420, 430 des Fahrzeugs 100 bereitgestellt werden. Die Vorrichtung 400 umfasst zu diesem Zweck eine Berechnungseinheit 401, insbesondere eine Auswahleinheit, zur Ermittlung der Fahrzeug-Beschleunigungsvorgabe 402 auf Basis der Mehrzahl von Beschleunigungsvorgaben 311, 321, 331. Die Vorrichtung 400, insbesondere die Berechnungseinheit 401, kann ausgebildet sein, die kleinste Beschleunigungsvorgabe 311, 321, 331 aus der Mehrzahl von Beschleunigungsvorgaben 311, 321, 331 als Fahrzeug-Beschleunigungsvorgabe 402 auszuwählen.

Die Vorrichtung 400 kann ferner eingerichtet sein, zumindest einem Teil der Regler 410, 420, 430 eine Rückmeldung 403 in Bezug auf die Fahrzeug-Beschleunigungsvorgabe 402 bereitzustellen. Die Rückmeldung 403 kann dabei umfassen bzw. anzeigen,
- den Wert der Fahrzeug-Beschleunigungsvorgabe 402; und/oder
- Information darüber, ob die Beschleunigungsvorgabe 311, 321, 331 des jeweiligen Reglers 410, 420, 430 in den Wert der Fahrzeug-Beschleunigungsvorgabe 402 eingeflossen ist oder nicht, bzw. ob der jeweilige Regler 410, 420, 430 aktiv oder nur passiv bei der Ermittlung der Fahrzeug-Beschleunigungsvorgabe 402 mitwirkt.

Der jeweilige Regler 410, 420, 430 kann dann seinen jeweiligen Betrieb auf Basis der Rückmeldung 403 anpassen. Beispielsweise kann die Trajektorienplanung eines Reglers 420, 430 jeweils neu (ausgehend von dem jeweils aktuellen Zustand des Fahrzeugs 100) durchgeführt werden, wenn die Rückmeldung 403 anzeigt, dass die von dem Regler 420, 430 ermittelte Beschleunigungsvorgabe 321, 331 nicht als Fahrzeug-Beschleunigungsvorgabe 402 berücksichtigt wurde.

Die o.g. Ermittlung einer Fahrzeug-Beschleunigungsvorgabe 402 kann an einer Sequenz von Zeitpunkt wiederholt werden, z.B. mit einer bestimmten Wiederholrate (z.B. 1Hz oder mehr, oder 10Hz oder mehr, oder 100Hz oder mehr). So kann ein dauerhaft komfortabler Betrieb eines Fahrzeugs 100 bewirkt werden.

In der Gesamtkette der Längsregelung eines Fahrzeugs 100 können somit mehrere unterschiedliche Regler 410, 420, 430 mit unterschiedlichen Regleransätzen implementiert sein. Die unterschiedlichen Regler 410, 420, 430 können für unterschiedliche Fahraufgaben (mit unterschiedlichen Regelungsverfahren) ausgelegt sein, insbesondere um für die jeweilige Fahraufgabe ein möglichst komfortables und/oder sicheres Fahrverhalten des Fahrzeugs 100 zu bewirken. Die in dem vorliegenden Dokument beschriebenen Maßnahmen sind darauf gerichtet, ein kooperatives Verhalten der Mehrzahl von unterschiedlichen Reglern 410, 420, 430 zu bewirken, und ruckfreie Übergänge zwischen den jeweils aktiv berücksichtigten Reglern 410, 420, 430 zu gewährleisten.

Wie in Zusammenhang mit den Figuren 2a bis 2c dargelegt, kann für eine Folgefahrt hinter einem Vorder-Fahrzeug 200 ein Bahnführungsregler 410 verwendet werden. Bei einer Freifahrt kann ein Regler 420 mit einem Planungsansatz verwendet werden. Ferner kann bei einem Spurwechsel bzw. bei einer Spurwechselvorbereitung ein Regler 430 mit einem anderen Planungsansatz verwendet werden.

Die Vorgaben 311, 321, 331 der unterschiedlichen Regler 410, 420, 430 können zu einer Sollbeschleunigung 402 für das Fahrzeug 100 fusioniert werden. Je nach Regler kann dabei eine direkt vorgegebene Sollbeschleunigung 311 (für den jetzigen (bestimmten) Zeitpunkt 315) oder eine prädizierte Sollbeschleunigen 321, 331 (für einen zeitlich vorausliegenden Zeitpunkt 325, 335) berücksichtigt werden.

Es kann eine Minimumauswahl der vorgegebenen Sollbeschleunigungen 311, 321, 331 als Fahrzeug-Sollbeschleunigung 402 erfolgen. Es kann somit der Regler 410, 420, 430 mit der geringsten Anforderung in Bezug auf die Beschleunigung bzw. mit dem größten Verzögerungswunsch priorisiert wird.

Über eine Rückmeldung 403 können die Regler 410, 420, 430 über den aktuell priorisierten Regler 410, 420, 430 informiert werden. Die ein oder mehreren nicht-priorisierten Regler 410, 420, 430 halten sich in dieser Zeit in einem Passiv-Zustand und geben weiterhin (z.B. periodisch) ihre individuelle Sollbeschleunigung 311, 321, 331 aus. Ferner kann als Rückmeldung 403 die aktuell priorisierte Sollbeschleunigung 402 an die Regler 410, 420, 430 zurückgeführt werden. So kann in besonders zuverlässiger Weise ein ruckfreier Übergang zwischen den Reglern 410, 420, 430 bewirkt werden.

Eine Fahrsituation, bei der es z.B. zu Übergängen zwischen unterschiedlichen Reglern 410, 420, 430 kommen kann, ist die Durchführung oder Vorbereitung eines Spurwechsels auf einer Autobahn. Dabei kann zunächst eine Freifahrt und/oder eine Folgefahrt durchgeführt werde, die ruckfrei in ein Spurwechselmanöver zu überführen ist.

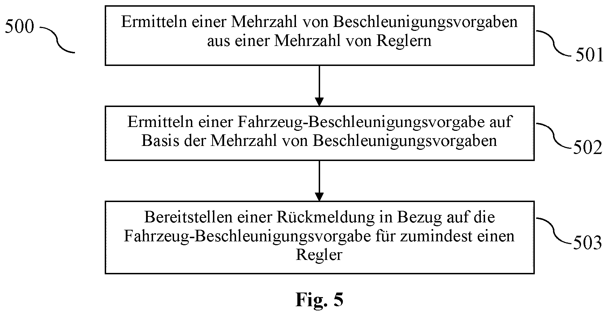

Fig. 5 zeigt ein Ablaufdiagramm eines (ggf. Computer-implementierten) Verfahrens 500 zur Ermittlung einer Fahrzeug-Beschleunigungsvorgabe 402 für ein Fahrzeug 100 bei Betrieb einer Mehrzahl von unterschiedlichen automatisierten Fahrfunktionen in einem Fahrzeug 100. Die unterschiedlichen automatisierten Fahrfunktionen können jeweils auf eine automatisierte Längs- und/oder Querführung des Fahrzeugs 100 gerichtet sein. Dabei kann im Rahmen der einzelnen Fahrfunktionen jeweils ein (separater) Regler betrieben werden, insbesondere um wiederholt, etwa periodisch, eine Beschleunigungsvorgabe (d.h. eine Soll-Beschleunigung) für das Fahrzeug 100 zu ermitteln. Die Beschleunigungsvorgabe, die auf Basis des Reglers einer Fahrfunktion ermittelt wird, wird in diesem Dokument als "Funktions-spezifische Beschleunigungsvorgabe bezeichnet. Die Beschleunigungsvorgabe kann sich auf eine Vorgabe für die Längsbeschleunigung und/oder auf eine Vorgabe für die Querbeschleunigung des Fahrzeugs 100 beziehen. Im Fahrzeug 100 können z.B. 2 oder mehr, oder 3 oder mehr Fahrfunktionen parallel betrieben werden, die jeweils einen Einfluss auf die automatisierte Längs- und/oder Querführung des Fahrzeugs 100 haben.

Das Verfahren 500 kann (periodisch mit einer bestimmten Frequenz von z.B. 1Hz oder mehr, oder 10Hz oder mehr, oder 100Hz oder mehr) wiederholt werden. Dabei kann das Verfahren 500 für einen bzw. an einem bestimmten Zeitpunkt umfassen, das Ermitteln 501, anhand der Mehrzahl von Reglern 410, 420, 430 für die entsprechende Mehrzahl von Fahrfunktionen, einer entsprechenden Mehrzahl von Funktions-spezifischen Beschleunigungsvorgaben 311, 321, 331. Es können somit mehrere Regler 410, 420, 430 separat betrieben werden, um für einen bestimmten Zeitpunkt aus der Sequenz von Zeitpunkten mehrere unterschiedliche Funktions-spezifische Beschleunigungsvorgaben 311, 321, 331 bereitzustellen.

Das Verfahren 500 umfasst ferner das Ermitteln 502 der Fahrzeug-Beschleunigungsvorgabe 402 für das automatisierte (Längs- und/oder Quer-) Führen des Fahrzeugs 100 an dem bestimmten Zeitpunkt auf Basis der Mehrzahl von Funktions-spezifischen Beschleunigungsvorgaben 311, 321, 331. Dabei kann insbesondere die Funktions-spezifische Beschleunigungsvorgabe 311, 321, 331 aus der Mehrzahl von Funktions-spezifischen Beschleunigungsvorgaben 311, 321, 331 als Fahrzeug-Beschleunigungsvorgabe 402 ausgewählt werden, die (bei Berücksichtigung des Vorzeichens) den kleinsten Wert aufweist (wobei ein positiver Wert einer Beschleunigung des Fahrzeugs 100 entspricht und wobei ein negativer Wert einer Verzögerung des Fahrzeugs 100 entspricht).

Die automatisierte Längs- und/oder Querführung des Fahrzeugs 100 kann dann an dem bestimmten Zeitpunkt auf Basis der ermittelten Fahrzeug-Beschleunigungsvorgabe 402 bewirkt werden. Insbesondere kann zumindest ein Längs- und/oder Querführungsaktor 103 des Fahrzeugs 100 betrieben werden, um die ermittelte Fahrzeug-Beschleunigungsvorgabe 402 umzusetzen. So kann ein zuverlässiger und komfortabler Betrieb von mehreren Fahrfunktion in einem Fahrzeug 100 bewirkt werden.

Des Weiteren kann das Verfahren 500 das Bereitstellen 503 einer Rückmeldung 403 in Bezug auf die ermittelte Fahrzeug-Beschleunigungsvorgabe 402 für zumindest einen Teil der Mehrzahl von Reglern 410, 420, 430 umfassen. Die Rückmeldung 403 kann einem Regler 410, 420, 430 insbesondere anzeigen, ob die von dem Regler 410, 420, 430 ermittelte Funktions-spezifische Beschleunigungsvorgabe 311, 321, 331 an dem bestimmten Zeitpunkt in die ermittelte Fahrzeug-Beschleunigungsvorgabe 402 eingeflossen ist. Insbesondere kann dem Regler 410, 420, 430 als Rückmeldung 403 angezeigt werden, ob die von dem Regler 410, 420, 430 ermittelte Funktions-spezifische Beschleunigungsvorgabe 311, 321, 331 an dem bestimmten Zeitpunkt als Fahrzeug-Beschleunigungsvorgabe 402 verwendet wurde oder nicht. Des Weiteren kann der Wert der Fahrzeug-Beschleunigungsvorgabe 402 als Rückmeldung 403 bereitgestellt werden.

Die Rückmeldung 403 kann von dem Teil der Mehrzahl von Reglern 410, 420, 430 bei der Ermittlung der jeweiligen Funktions-spezifischen Beschleunigungsvorgabe 311, 321, 331 für einen nachfolgenden Zeitpunkt aus der Sequenz von Zeitpunkten berücksichtigt wird. Insbesondere kann die von einem Regler 410, 420, 430 für den nachfolgenden Zeitpunkt ermittelte Funktions-spezifische Beschleunigungsvorgabe 311, 321, 331 von der Rückmeldung 403 in Bezug auf die für den bestimmten Zeitpunkt ermittelte Fahrzeug-Beschleunigungsvorgabe 402 abhängen. So können die Zuverlässigkeit und der Komfort der automatisierten Längs- und/oder Querführung eines Fahrzeugs 100 bei Betrieb von mehreren Fahrfunktionen weiter erhöht werden.

Durch die in diesem Dokument beschriebenen Maßnahmen kann somit der Komfort der automatisierten (Längs-) Führung eines Fahrzeugs 100 beim parallelen Betrieb von mehreren automatisierten Fahrfunktionen erhöht werden.

Die vorliegende Erfindung ist nicht auf die gezeigten Ausführungsbeispiele beschränkt. Insbesondere ist zu beachten, dass die Beschreibung und die Figuren nur beispielhaft das Prinzip der vorgeschlagenen Verfahren, Vorrichtungen und Systeme veranschaulichen sollen.

## Patentansprüche

1. Vorrichtung (101, 400) zur Ermittlung einer Fahrzeug-Beschleunigungsvorgabe (402) für ein Fahrzeug (100) bei Betrieb einer Mehrzahl von unterschiedlichen automatisierten Fahrfunktionen in einem Fahrzeug (100); wobei die Vorrichtung (101, 400) eingerichtet ist, für einen bestimmten Zeitpunkt,
- anhand einer Mehrzahl von Reglern (410, 420, 430) für die Mehrzahl von Fahrfunktionen eine entsprechende Mehrzahl von Funktions-spezifischen Beschleunigungsvorgaben (311, 321, 331) zu ermitteln; und
- die Fahrzeug-Beschleunigungsvorgabe (402) für ein automatisiertes Führen des Fahrzeugs (100) an dem bestimmten Zeitpunkt auf Basis der Mehrzahl von Funktions-spezifischen Beschleunigungsvorgaben (311, 321, 331) zu ermitteln;
**dadurch gekennzeichnet, dass** die Vorrichtung (101, 400) eingerichtet ist,
- zumindest einem Teil der Mehrzahl von Reglern (410, 420, 430) eine Rückmeldung (403) in Bezug auf die ermittelte Fahrzeug-Beschleunigungsvorgabe (402) bereitzustellen; wobei die Rückmeldung (403) von dem Teil der Mehrzahl von Reglern (410, 420, 430) bei der Ermittlung der jeweiligen Funktions-spezifischen Beschleunigungsvorgabe (311, 321, 331) für einen nachfolgenden Zeitpunkt berücksichtigt wird.

2. Vorrichtung (101, 400) gemäß Anspruch 1, wobei die Vorrichtung (101, 400) eingerichtet ist, eine, insbesondere die relativ kleinste Funktions-spezifische Beschleunigungsvorgabe (311, 321, 331), der Mehrzahl von Funktions-spezifischen Beschleunigungsvorgaben (311, 321, 331) als die Fahrzeug-Beschleunigungsvorgabe (402) auszuwählen.

3. Vorrichtung (101, 400) gemäß Anspruch 2, wobei die Vorrichtung (101, 400) eingerichtet ist, die Funktions-spezifische Beschleunigungsvorgabe (311, 321, 331) aus der Mehrzahl von Funktions-spezifischen Beschleunigungsvorgaben (311, 321, 331) als Fahrzeug-Beschleunigungsvorgabe (402) auszuwählen, die auf eine möglichst geringe Beschleunigung oder auf eine möglichst hohe Verzögerung des Fahrzeugs (100) abzielt.

4. Vorrichtung (101, 400) gemäß einem der vorhergehenden Ansprüche, wobei
- die Mehrzahl von Reglern (410, 420, 430) zumindest einen planenden Regler (420, 430) umfasst, der eingerichtet ist, zur Ermittlung der Funktions-spezifischen Beschleunigungsvorgabe (321, 331) eine Beschleunigung (301) des Fahrzeugs (100) an einem vorausliegenden Zeitpunkt (325, 335), insbesondere einen Verlauf (320, 330) der Beschleunigung (301) des Fahrzeugs (100) an einer Sequenz von vorausliegenden Zeitpunkten (302), zu planen; und
- die Vorrichtung (101, 400) eingerichtet ist, die Funktions-spezifische Beschleunigungsvorgabe (321, 331) des planenden Reglers (420, 430) auf Basis der geplanten Beschleunigung (301) des Fahrzeugs (100) an dem vorausliegenden Zeitpunkt (325, 335), insbesondere als die geplante Beschleunigung (301) des Fahrzeugs (100) an dem vorausliegenden Zeitpunkt (325, 335), zu ermitteln.

5. Vorrichtung (101, 400) gemäß einem der vorhergehenden Ansprüche, wobei
- die Mehrzahl von Reglern (410, 420, 430) zumindest einen planenden Regler (420, 430) umfasst;
- die Rückmeldung (402) für den planenden Regler (420, 430) anzeigt, ob der planende Regler (420, 430) an dem bestimmten Zeitpunkt aktiv an der Ermittlung der Fahrzeug-Beschleunigungsvorgabe (402) mitgewirkt hat, oder nur passiv einen Funktions-spezifischen Beschleunigungsvorgabe (321, 331) bereitgestellt hat; und
- eine Planung des planenden Reglers (420, 430), insbesondere ein von dem planenden Regler (420, 430) prädizierter Verlauf (320, 330) der Beschleunigung (301) des Fahrzeugs (100), für den nachfolgenden Zeitpunkt davon abhängt, ob der planende Regler (420, 430) an dem bestimmten Zeitpunkt aktiv an der Ermittlung der Fahrzeug-Beschleunigungsvorgabe (402) mitgewirkt hat, oder nur passiv eine Funktions-spezifische Beschleunigungsvorgabe (321, 331) bereitgestellt hat.

6. Vorrichtung (101, 400) gemäß Anspruch 5, wobei der planende Regler (420, 430) ausgebildet ist,
- den prädizierten Verlauf (320, 330) der Beschleunigung (301) des Fahrzeugs (100) für den nachfolgenden Zeitpunkt auf Basis eines prädizierten Verlaufs (320, 330) der Beschleunigung (301) des Fahrzeugs (100) für den bestimmten Zeitpunkt zu ermitteln, wenn der planende Regler (420, 430) an dem bestimmten Zeitpunkt aktiv an der Ermittlung der Fahrzeug-Beschleunigungsvorgabe (402) mitgewirkt hat; und/oder
- den prädizierten Verlauf (320, 330) der Beschleunigung (301) des Fahrzeugs (100) für den nachfolgenden Zeitpunkt neu zu ermitteln, ohne einen prädizierten Verlauf (320, 330) der Beschleunigung (301) des Fahrzeugs (100) für den bestimmten Zeitpunkt zu berücksichtigen, wenn der planende Regler (420, 430) an dem bestimmten Zeitpunkt nur passiv eine Funktions-spezifische Beschleunigungsvorgabe (321, 331) bereitgestellt hat.

7. Vorrichtung (101, 400) gemäß einem der vorhergehenden Ansprüche, wobei die Mehrzahl von automatisierten Fahrfunktionen umfasst,
- einen Abstandsregler für eine Folgefahrt des Fahrzeugs (100);
- einen Geschwindigkeitsregler für eine Freifahrt des Fahrzeugs (100); und/oder
- einen Spurwechselassistenten für einen Spurwechsel des Fahrzeugs (100).

8. Vorrichtung (101, 400) gemäß einem der vorhergehenden Ansprüche, wobei die Mehrzahl von Reglern (410, 420, 430) umfasst,
- einen Bahnführungsregler;
- einen P-Regler; und/oder
- einen planenden Regler, der ausgebildet ist, eine vorausliegende Trajektorie des Fahrzeugs (100) zu planen, um die Funktions-spezifischen Beschleunigungsvorgabe (321, 331) zu ermitteln.

9. Vorrichtung (101, 400) gemäß einem der vorhergehenden Ansprüche, wobei die Vorrichtung (101, 400) eingerichtet ist, einen Längs- und/oder Querführungsaktor (103) des Fahrzeugs (100) in Abhängigkeit von der ermittelten Fahrzeug-Beschleunigungsvorgabe (402) zu betreiben.

10. Vorrichtung (101, 400) gemäß einem der vorhergehenden Ansprüche, wobei die Vorrichtung (101, 400) eingerichtet ist, an einer Sequenz von aufeinanderfolgenden Zeitpunkten jeweils
- eine Mehrzahl von Funktions-spezifischen Beschleunigungsvorgaben (311, 321, 331) zu ermitteln;
- eine Fahrzeug-Beschleunigungsvorgabe (402) auf Basis der Mehrzahl von Funktions-spezifischen Beschleunigungsvorgaben (311, 321, 331) zu ermitteln; und
- dem Teil der Mehrzahl von Reglern (410, 420, 430) eine Rückmeldung (403) in Bezug auf die ermittelte Fahrzeug-Beschleunigungsvorgabe (402) bereitzustellen.

11. Verfahren (500) zur Ermittlung einer Fahrzeug-Beschleunigungsvorgabe (402) für ein Fahrzeug (100) bei Betrieb einer Mehrzahl von unterschiedlichen automatisierten Fahrfunktionen in einem Fahrzeug (100); wobei das Verfahren (500) für einen bestimmten Zeitpunkt umfasst:
- Ermitteln (501), anhand einer Mehrzahl von Reglern (410, 420, 430) für die Mehrzahl von Fahrfunktionen, einer entsprechenden Mehrzahl von Funktions-spezifischen Beschleunigungsvorgaben (311, 321, 331); und
- Ermitteln (502) der Fahrzeug-Beschleunigungsvorgabe (402) für ein automatisiertes Führen des Fahrzeugs (100) an dem bestimmten Zeitpunkt auf Basis der Mehrzahl von Funktions-spezifischen Beschleunigungsvorgaben (311, 321, 331);
**dadurch gekennzeichnet, dass** das Verfahren (500) weiter umfasst:
- Bereitstellen (503) einer Rückmeldung (403) in Bezug auf die ermittelte Fahrzeug-Beschleunigungsvorgabe (402) für zumindest einen Teil der Mehrzahl von Reglern (410, 420, 430); wobei die Rückmeldung (403) von dem Teil der Mehrzahl von Reglern (410, 420, 430) bei der Ermittlung der jeweiligen Funktions-spezifischen Beschleunigungsvorgabe (311, 321, 331) für einen nachfolgenden Zeitpunkt berücksichtigt wird.

## Claims

1. Device (101, 400) for ascertaining a vehicle acceleration specification (402) for a vehicle (100) during operation of a plurality of different automated driving functions in a vehicle (100); wherein the device (101, 400) is configured, for a specific point in time
- on the basis of a plurality of controllers (410, 420, 430) for the plurality of driving functions, to ascertain a corresponding plurality of function-specific acceleration specifications (311, 321, 331); and
- to ascertain the vehicle acceleration specification (402) for automated guidance of the vehicle (100) at the specific point in time on the basis of the plurality of function-specific acceleration specifications (311, 321, 331);
**characterized in that** the device (101, 400) is configured
- to provide feedback (403) with respect to the ascertained vehicle acceleration specification (402) to at least a part of the plurality of controllers (410, 420, 430); wherein the feedback (403) is taken into consideration by the part of the plurality of controllers (410, 420, 430) in the ascertainment of the respective function-specific acceleration specification (311, 321, 331) for a subsequent point in time.

2. Device (101, 400) according to Claim 1, wherein the device (101, 400) is configured to select a, in particular the relatively smallest function-specific acceleration specification (311, 321, 331), of the plurality of function-specific acceleration specifications (311, 321, 331) as the vehicle acceleration specification (402).

3. Device (101, 400) according to Claim 2, wherein the device (101, 400) is configured to select the function-specific acceleration specification (311, 321, 331) from the plurality of function-specific acceleration specifications (311, 321, 331) as the vehicle acceleration specification (402), which is intended for the least possible acceleration or the highest possible deceleration of the vehicle (100).

4. Device (101, 400) according to any one of the preceding claims, wherein
- the plurality of controllers (410, 420, 430) comprises at least one planning controller (420, 430), which is configured, to ascertain the function-specific acceleration specification (321, 331), to plan an acceleration (301) of the vehicle (100) at an upcoming point in time (325, 335), in particular a course (320, 330) of the acceleration (301) of the vehicle (100) at a sequence of upcoming points in time (302); and
- the device (101, 400) is configured to ascertain the function-specific acceleration specification (321, 331) of the planning controller (420, 430) on the basis of the planned acceleration (301) of the vehicle (100) at the upcoming point in time (325, 335), in particular as the planned acceleration (301) of the vehicle (100) at the upcoming point in time (325, 335).

5. Device (101, 400) according to any one of the preceding claims, wherein
- the plurality of controllers (410, 420, 430) comprises at least one planning controller (420, 430);
- the feedback (402) for the planning controller (420, 430) indicates whether the planning controller (420, 430) has actively participated in the ascertainment of the vehicle acceleration specification (402) at the specific point in time, or has only passively provided a function-specific acceleration specification (321, 331); and
- planning of the planning controller (420, 430), in particular a course (320, 330) of the acceleration (301) of the vehicle (100) predicted by the planning controller (420, 430), for the subsequent point in time is dependent on whether the planning controller (420, 430) has actively participated in the ascertainment of the vehicle acceleration specification (402) at the specific point in time, or has only passively provided a function-specific acceleration specification (321, 331).

6. Device (101, 400) according to Claim 5, wherein the planning controller (420, 430) is designed
- to ascertain the predicted course (320, 330) of the acceleration (301) of the vehicle (100) for the subsequent point in time on the basis of a predicted course (320, 330) of the acceleration (301) of the vehicle (100) for the specific point in time if the planning controller (420, 430) has actively participated in the ascertainment of the vehicle acceleration specification (402) at the specific point in time; and/or
- to ascertain the predicted course (320, 330) of the acceleration (301) of the vehicle (100) for the subsequent point in time again without taking into consideration a predicted course (320, 330) of the acceleration (301) of the vehicle (100) for the specific point in time if the planning controller (420, 430) has only passively provided a function-specific acceleration specification (321, 331) at the specific point in time.

7. Device (101, 400) according to any one of the preceding claims, wherein the plurality of automated driving functions comprises
- a distance controller for a following drive of the vehicle (100);
- a speed controller for a free drive of the vehicle (100); and/or
- a lane change assistant for a lane change of the vehicle (100).

8. Device (101, 400) according to any one of the preceding claims, wherein the plurality of controllers (410, 420, 430) comprises
- a path guidance controller;
- a P controller; and/or
- a planning controller, which is designed to plan an upcoming trajectory of the vehicle (100) in order to ascertain the function-specific acceleration specification (321, 331).

9. Device (101, 400) according to any one of the preceding claims, wherein the device (101, 400) is configured to operate a longitudinal and/or lateral guidance actuator (103) of the vehicle (100) as a function of the ascertained vehicle acceleration specification (402).

10. Device (101, 400) according to any one of the preceding claims, wherein the device (101, 400) is configured, at each of a sequence of successive points in time
- to ascertain a plurality of function-specific acceleration specifications (311, 321, 331);
- to ascertain a vehicle acceleration specification (402) on the basis of the plurality of function-specific acceleration specifications (311, 321, 331); and
- to provide feedback (403) with respect to the ascertained vehicle acceleration specification (402) to the part of the plurality of controllers (410, 420, 430).

11. Method (500) for ascertaining a vehicle acceleration specification (402) for a vehicle (100) during operation of a plurality of different automated driving functions in a vehicle (100); wherein the method (500) comprises for a specific point in time:
- ascertaining (501), on the basis of a plurality of controllers (410, 420, 430) for the plurality of driving functions, a corresponding plurality of function-specific acceleration specifications (311, 321, 331); and
- ascertaining (502) the vehicle acceleration specification (402) for automated guidance of the vehicle (100) at the specific point in time on the basis of the plurality of function-specific acceleration specifications (311, 321, 331);
**characterized in that** the method (500) further comprises:
- providing (503) feedback (403) with respect to the ascertained vehicle acceleration specification (402) for at least a part of the plurality of controllers (410, 420, 430); wherein the feedback (403) is taken into consideration by the part of the plurality of controllers (410, 420, 430) in the ascertainment of the respective function-specific acceleration specification (311, 321, 331) for a subsequent point in time.

## Revendications

1. Dispositif (101, 400) permettant d'établir une spécification d'accélération de véhicule (402) pour un véhicule (100) lors du fonctionnement d'une pluralité de fonctions de conduits automatisées différentes dans un véhicule (100) ; le dispositif (101, 400) étant conçu, pour un instant déterminé,
- pour établir à l'aide d'une pluralité de régulateurs (410, 420, 430) une pluralité correspondante de spécifications d'accélération (311, 321, 331) spécifiques à une fonction pour la pluralité de fonctions de conduite ; et
- pour établir la spécification d'accélération de véhicule (402) pour une conduite automatisée du véhicule (100) à l'instant déterminé sur la base de la pluralité de spécifications d'accélération (311, 321, 331) spécifiques à une fonction ;
**caractérisé en ce que** le dispositif (101, 400) est conçu
- pour fournir au moins à une partie de la pluralité de régulateurs (410, 420, 430) une rétroaction (403) concernant la spécification d'accélération de véhicule (402) établie ; dans lequel la rétroaction (403) est prise en compte par la partie de la pluralité de régulateurs (410, 420, 430) lors de l'établissement de la spécification d'accélération (311, 321, 331) spécifique à une fonction respective pour un instant suivant.

2. Dispositif (101, 400) selon la revendication 1, dans lequel le dispositif (101, 400) est conçu pour sélectionner en tant que spécification d'accélération de véhicule (402) une spécification d'accélération (311, 321, 331) spécifique à une fonction, en particulier la spécification relativement la plus petite, de la pluralité de spécifications d'accélération (311, 321, 331) spécifiques à une fonction.

3. Dispositif (101, 400) selon la revendication 2, dans lequel le dispositif (101, 400) est conçu pour sélectionner en tant que spécification d'accélération de véhicule (402) la spécification d'accélération (311, 321, 331) spécifique à une fonction parmi la pluralité de spécifications d'accélération (311, 321, 331) spécifiques à une fonction qui vise une accélération aussi faible que possible ou une décélération aussi forte que possible du véhicule (100).

4. Dispositif (101, 400) selon l'une quelconque des revendications précédentes, dans lequel
- la pluralité de régulateurs (410, 420, 430) comprend au moins un régulateur de planification (420, 430) qui, afin d'établir la spécification d'accélération (321, 331) spécifique à une fonction, est conçu pour planifier une accélération (301) du véhicule (100) à un instant futur (325, 335), en particulier une courbe (320, 330) de l'accélération (301) du véhicule (100) sur une séquence d'instants futurs (302) ; et
- le dispositif (101, 400) est conçu pour établir la spécification d'accélération (321, 331) spécifique à une fonction du régulateur de planification (420, 430) sur la base de l'accélération planifiée (301) du véhicule (100) à l'instant futur (325, 335), en particulier en tant qu'accélération planifiée (301) du véhicule (100) à l'instant futur (325, 335).

5. Dispositif (101, 400) selon l'une quelconque des revendications précédentes, dans lequel
- la pluralité de régulateurs (410, 420, 430) comprend au moins un régulateur de planification (420, 430) ;
- la rétroaction (402) pour le régulateur de planification (420, 430) indique si le régulateur de planification (420, 430) a participé activement à l'instant déterminé à l'établissement de la spécification d'accélération de véhicule (402), ou s'il a seulement passivement fourni une spécification d'accélération (321, 331) spécifique à une fonction ; et
- une planification du régulateur de planification (420, 430), en particulier une courbe (320, 330) prédite par le régulateur de planification (420, 430) de l'accélération (301) du véhicule (100) pour l'instant suivant, dépend du fait que le régulateur de planification (420, 430) a participé activement à l'instant déterminé à l'établissement de la spécification d'accélération de véhicule (402) ou qu'il a seulement passivement fourni une spécification d'accélération (321, 331) spécifique à une fonction.

6. Dispositif (101, 400) selon la revendication 5, dans lequel le régulateur de planification (420, 430) est réalisé
- pour établir la courbe prédite (320, 330) de l'accélération (301) du véhicule (100) pour l'instant suivant sur la base d'une courbe prédite (320, 330) de l'accélération (301) du véhicule (100) pour l'instant déterminé lorsque le régulateur de planification (420, 430) a participé activement à l'instant déterminé à l'établissement de la spécification d'accélération de véhicule (402) ; et/ou
- pour établir à nouveau la courbe prédite (320, 330) de l'accélération (301) du véhicule (100) pour l'instant suivant sans tenir compte d'une courbe prédite (320, 330) de l'accélération (301) du véhicule (100) pour l'instant déterminé lorsque le régulateur de planification (420, 430) à l'instant déterminé n'a que passivement fourni une spécification d'accélération (321, 331) spécifique à une fonction.

7. Dispositif (101, 400) selon l'une quelconque des revendications précédentes, dans lequel la pluralité de fonctions de conduite automatisées comprend
- un régulateur de distance pour un trajet asservi du véhicule (100) ;
- un régulateur de vitesse pour un trajet libre du véhicule (100) ; et/ou
- un assistant de changement de voie pour un changement de voie du véhicule (100).

8. Dispositif (101, 400) selon l'une quelconque des revendications précédentes, dans lequel la pluralité de régulateurs (410, 420, 430) comprend
- un régulateur de guidage de tracé ;
- un régulateur P ; et/ou
- un régulateur de planification qui est réalisé pour planifier une trajectoire future du véhicule (100) afin d'établir la spécification d'accélération (321, 331) spécifique à une fonction.

9. Dispositif (101, 400) selon l'une quelconque des revendications précédentes, dans lequel le dispositif (101, 400) est conçu pour faire fonctionner un actionneur de guidage longitudinal et/ou transversal (103) du véhicule (100) en fonction de la spécification d'accélération de véhicule (402) établie.

10. Dispositif (101, 400) selon l'une quelconque des revendications précédentes, dans lequel le dispositif (101, 400), pour une séquence d'instants consécutifs, est conçu respectivement
- pour établir une pluralité de spécifications d'accélération (311, 321, 331) spécifiques à une fonction ;
- pour établir une spécification d'accélération de véhicule (402) sur la base de la pluralité de spécifications d'accélération (311, 321, 331) spécifiques à une fonction ; et
- pour fournir à la partie de la pluralité de régulateurs (410, 420, 430) une rétroaction (403) concernant la spécification d'accélération de véhicule (402) établie.

11. Procédé (500) permettant d'établir une spécification d'accélération de véhicule (402) pour un véhicule (100) lors du fonctionnement d'une pluralité de fonctions de conduite automatisées différentes dans un véhicule (100) ; dans lequel le procédé (500) comprend pour un instant déterminé les étapes consistant à :
- établir (501), à l'aide d'une pluralité de régulateurs (410, 420, 430) pour la pluralité de fonctions de conduite, une pluralité correspondante de spécifications d'accélération (311, 321, 331) spécifiques à une fonction ; et
- établir (502) la spécification d'accélération de véhicule (402) pour une conduite automatisée du véhicule (100) à l'instant déterminé sur la base de la pluralité de spécifications d'accélération (311, 321, 331) spécifiques à une fonction ;
**caractérisé en ce que** le procédé (500) comprend en outre l'étape consistant à :
- fournir (503) une rétroaction (403) concernant la spécification d'accélération de véhicule (402) établie pour au moins une partie de la pluralité de régulateurs (410, 420, 430) ; dans lequel la rétroaction (403) de la partie de la pluralité de régulateurs (410, 420, 430) est prise en compte lors de l'établissement de la spécification d'accélération (311, 321, 331) spécifique à une fonction respective pour un instant suivant.
